# EUROPEAN PATENT SPECIFICATION

(11) **EP 1 365 646 B1**
(45) Date of publication and mention of the grant of the patent: **08.08.2007**
(21) Application number: 01998221.4
(22) Date of filing: 03.12.2001
(51) Int. Cl.: A01N 1/00

(54) **EMBALMING FLUID**
EINBALSAMIERUNGSFLÜSSIGKEIT
LIQUIDE D'EMBAUMEMENT

(30) Priority: 01.12.2000 GB 0029410
(43) Date of publication of application: 03.12.2003
(73) Proprietor: Aardbalm Limited, Chelmsford, Essex CM3 5ZF (GB)
(72) Inventor: BARROW, Dermot Christopher John, Cross-in-Hand, East Sussex TN21 0NB (GB)
(74) Representative: Sanderson, James L.C.
(86) International application number: PCT/GB2001/005337
(87) International publication number: WO 2002/043484

(56) References cited:
- WO-A-00/18237
- US-A- 4 755 378
- US-A- 5 679 333

## Description

This invention relates to an embalming fluid for use in an embalming process.

Embalming was developed and widely practised in ancient Egypt where, from around 6000 BC to 600 AD, 400 million bodies were mummified. The processes involved in traditional Egyptian embalming have led to the remarkable preservation of many bodies.

The embalming process nowadays differs markedly from the religious practices of ancient Egypt; the purpose is partly cosmetic (to improve the appearance of the body, and thereby reduce the distress caused to relatives of the deceased) and partly preservative, although the main aim is to ensure that the body remains in a hygienic condition during the period up to burial or cremation, rather than providing long-lasting preservation of the tissues.

The modern embalming process involves flushing out the blood from the circulatory system of the body and replacing it with an embalming fluid which has a stabilising and protecting action on the body. The embalming fluid is injected into the arterial system of the cadaver and directly into some organs. Displaced body fluids are treated and disposed of via the public sewerage system or more usually by a contracted disposal firm.

The normal steps in the modern embalming process are as follows:
- The body is placed in.a proper position on the embalming table with the pubic area covered with a modesty cloth.
- The body is washed and disinfected.
- The face is shaved as necessary.
- The eyes are closed. This is usually accomplished with a small curved plastic disc called an "eye cap" placed under the eyelid. Perforations in the cap are sometimes present to help hold the eye lid in place.
- The mouth is closed. This is usually accomplished by the placing of a specially designed "tack" in the upper and lower jaw. Each tack has a fine wire attached. By twisting the two wires together, the jaw is thus closed and the lips are set to the natural lip line using a cream to retain the proper position and to prevent dehydration.
- The lower body orifice(s) may be plugged to prevent leakage.
- The embalming solution is prepared. The modern embalming machine consists of a 2-3 gallon reservoir and an electric pump.
- An incision is made over the carotid artery (where the neck meets the shoulder) or over the femoral artery (in the leg at the groin). The artery and a nearby vein are located and isolated.
- A tube which is attached to the machine is inserted into the artery. A slightly larger tube is placed into the accompanying vein. This tube is attached via a hose to a collecting tank.
- The fluid is injected into the artery under pressure by the embalming machine. As the blood is displaced by the fluid going in, it is forced out of the body from the vein and is disposed of. The pressure forces the embalming fluid into the capillaries and eventually to the cells of the body. After sufficient solution (typically approximately 2-10 litres depending on body size, more particularly vascular capacity) of solution are injected into the body, the blood has thinned and the fluid coming through the vein tube is mostly embalming fluid.
- The tubes are removed and the incision sutured.
- The abdominal cavity is treated by the use of a hollow tube called a trocar that is used to aspirate gases and liquid contents under suction.
   A preservative chemical - generally a more concentrated solution of the embalming fluid - is introduced via the trocar needle.
- The body is again washed and cream is placed on the hands and face to prevent dehydration.
- The hair is shampooed and the finger nails cleaned.
- The body is covered with a sheet awaiting dressing and placement in the casket.
- Cosmetics may be applied later to improve the natural colour of the body, although this will be less important if the embalming fluid includes a colorant. Much of the natural colour is created by blood in facial capillaries - this is no longer present after embalming. In the case of women, cosmetics used in life may also be used to recreate the "look" the person had during life. The hair is combed or set.

The foregoing sequence of steps is given for the purpose of illustration only and is not intended to be limiting on the invention. Embalming fluids in accordance with this invention will be administered in accordance with the professional judgment of the embalmer.

The earliest modern embalming fluids contained arsenic, but these solutions were soon replaced by formaldehyde-based embalming fluids. Despite its unpleasant and dangerous properties, the use of formaldehyde in embalming has become almost universal.

Formaldehyde acts as a chemical fixing agent, reacting with the soluble albumins (proteins) in the cells of the body and converting them to albuminoids which are gels. By pumping a formaldehyde solution through the vascular system of a body, the chemical agent perfuses into the tissues and exerts its disinfecting and preservative functions.

Formaldehyde is obtained commercially as an aqueous solution (formalin), which is usually a ca. 28% solution, and this is diluted down by the funeral director or embalmer to ca. 1-3% concentration. Typically, and depending on body size, more particularly vascular capacity, 2-10 litres of diluted solution are used per embalming.

Formaldehyde-based embalming fluids may or may not contain other chemicals such as colorants, humectants, disinfectants, sequestrants, pH stabilisers, etc.

Formaldehyde has long been used in the embalming profession as it confers excellent preservative properties on the body and is an effective disinfectant and anti-microbial agent.

Although formaldehyde is very effective in preserving tissues for the timescale required, it is nevertheless a very hazardous material; it is highly toxic when inhaled and possesses irritant properties when in contact with the skin or eyes. It also has carcinogenic activity and has been linked to many different forms of cancer - nasal, lung, testicular and brain cancer as well as leukaemia. Studies conducted by the National Cancer Institute in the USA have shown that embalmers were at greater risk for leukaemia, testicular and brain cancer than the general population.

The permitted limit of exposure to formaldehyde has been gradually reduced and funeral directors and embalmers have to work in an environment where rapid changes of air are possible.

In addition, the disposal of formaldehyde can create problems as it should not enter sewerage systems or water courses. Its effect on soil and soil organisms is not certain, but formaldehyde has been shown to be toxic to fish and related species when introduced into water systems. Recommended disposal is via incineration.

Aldehydes other than formaldehyde, especially glutaraldehyde have also found use in embalming. However, at least some of the above problems have also occurred here.

There is therefore a long term problem both for the environment and for the embalmer himself in using aldehyde in embalming fluids. Consequently there is a need for an embalming fluid which is essentially free from aldehyde.

Accordingly, this invention aims to provide an essentially aldehyde-free embalming fluid that is non-toxic, easy to make up and use, effective, and which is also environmentally acceptable and biodegradable.

According to one aspect of the present invention, there is provided a pseudoplastic embalming fluid characterised in that it is essentially free of aldehyde, which fluid comprises:
(a) 0.05-3% by weight of a vegetable-based, water-soluble polymer producing a pseudoplastic solution when dissolved in water;
(b) 0.05-2% by weight of a non-toxic disinfectant which is free from formaldehyde; and the balance
(c) potable water,
the fluid optionally containing additionally one or more additives selected from perfumes, colorants, sequestrants and anti-coagulants.

According to a second aspect, the present invention provides a method of manufacture which comprises the use of a vegetable-based, water-soluble polymer and a non-toxic, iodine-based disinfectant in the formulation of an embalming fluid which is essentially free from aldehyde.

According to a third aspect of this invention, there is provided a method of embalming, which comprises injecting into the body which is to be embalmed, a fluid in accordance with the invention.

The vegetable-based polymer advantageously produces a pseudoplastic solution when dissolved in water. Preferably the polymer is a sodium alginate. These are hydrophilic polysaccharides consisting of blocks of D-mannuronic acid linked in the β configuration through the 1- and 4- positions and L-guluronic acid units linked in the a configuration through the 1- and 4- positions.

The currently preferred polymer can be "Algin I-S" manufactured and distributed by Kimitsu Chemical Industries Co., Ltd., or Protanol UP 9356 manufactured and distributed by FMC Biopolymer, and is a white free-flowing powder which is odourless and tasteless. An aqueous solution containing 1% by weight of this product has a viscosity of Ca. 700-1200 mPa.s at 20°C.

The preferred product is readily available, is derived from a renewable natural resource and is fully and readily biodegradable.

The vegetable-based polymer has pseudoplastic properties which make for ease of preparation and injection but give some thickening when the force is removed. It also contributes some antiseptic benefits.

The disinfectant is preferably iodine-based, and polyvinylpyrrolidone- iodine is especially preferred. This material has a broad antimicrobial spectrum and is readily available; it is sometimes known as "PVP iodine". Bacteria, viruses, bacterial endospores and fungi are destroyed through oxidative interaction and direct iodination of biological macromolecules. Polyvinylpyrrolidone-iodine is available from various commercial sources including Graymor Chemical Co. of Elizabeth, New Jersey and Graymor Chemical Hamburg GmbH, Hamburg, Germany.

The perfume should be a naturally based material, preferably a fragrant oil, e.g. rose oil, (*Rosa centifolium)* sandalwood oil *Santalum album)* or geranium oil (*Pelargonium graveolens),* which may be incorporated in dilute form. Other suitable fragrances include chrysanthemum oil and freesia oil.

Such materials are readily available; a suitable source for rose oil and sandalwood oil is, for example, Elixarome Ltd. of Tonbridge, Kent (England).

A colorant is preferably added to give a more realistic skin colour to the cadaver: the colorant used will vary depending on the ethnic origin of the cadaver. The colorant should be a natural vegetable dye, preferably cochineal. Suitable colorants are readily available commercially, e.g. from Cybercolors Ltd. of Monkstown, Co. Cork, Ireland or Warner Jenkinson of St. Louisi Missouri, USA.

An anti-coagulant is preferably added to aid penetration of the embalming fluid and to break down thickened blood areas. The anti-coagulant is preferably sodium citrate, readily available commercially, e.g. from ADM Ingredients Ltd. of Erith, Kent (England).

A sequestrant is preferably incorporated to prevent interaction by any high levels of divalent salts in the water used. A preferred sequestrant is sodium hexametaphosphate, which may be readily obtained commercially, for example from Rhodia Consumer Specialties, Nancy, West Midlands (UK).

Potable water, including de-ionised water or demineralised water, is to be used for formulating an embalming fluid in accordance with this invention.

The components of the embalming fluid of this invention will be combined in appropriate proportions; in particular, the quantities of the polymer component and the disinfecting component will be selected according to the site into which the embalming fluid is to be injected. Conventionally, more concentrated solutions are injected into the major organs of the body, while more dilute solutions arc injected into the vascular system.

In one embodiment, the invention provides an embalming fluid essentially free of aldehyde, which fluid comprises:
(a) a sodium alginate polymer;
(b) polyvinylpyrrolidone-iodine and
(a) potable water,
optionally with conventional additives, e.g. one or more perfumes, sequestrants and colorants, and the ratio (by weight) of polymer to disinfectant being in the range from 1:30 to 30:1.

The embalming fluid may in addition to the vegetable based polymer and disinfectant comprise about 0.001 to 0.05% by weight of perfume, about 0.01 to 0:3% by weight of colorant, 0.1 - 1.0% of sequestrant and 0.01 0.07% of anticoagulant, the balance being potable water.

Preferably, the embalming fluid, comprises the vegetable based polymer and disinfectant, 0.001-0.05% of perfume, 0.01-0.1% by weight of colorant, 0,1 - 0.5% by weight of sequestrant, 0.01-0.03% by weight of anti-coagulant and potable water in an amount such as to constitute from 96.3 to 99.7% by weight of the embalming fluid.

According to a fourth aspect of the present invention, there is provided a kit for use in formulating an aldehyde-free embalming fluid, the kit comprising, in packaged form, an alginate polymer; an iodine-based disinfectant; a perfume; a colorant; a sequestrant and an anti-coagulant.

The major organs of the body will usually be injected with a more concentrated solution, typically 2-4 times the concentration of that used for the vascular system; the limiting concentration of solution is determined by the viscosity of the embalming fluid.

According to a fifth aspect of the present invention, there is provided a concentrated solution to be diluted before use as an embalming solution according to the first aspect of the invention.

A preferred method of making up an embalming fluid using the concentrated solution in accordance with this invention will now be described.

The concentrated solution is poured into 7-10 litres of potable water in a suitable container and the whole is stirred with the minimum of stirring until a homogenous embalming fluid is obtained.

If using a powder mix, then a small portion, say 10%, of the potable water to be used is taken and a powder mix of the other components of the embalming fluid is sprinkled slowly into it. The mixture is stirred vigorously until the powder is well dispersed. The mixture is allowed to stand until all the powder has been taken up by the water and the resulting product is then added to the final quantity of the water and the whole mixture stirred until a homogenous solution is obtained. Stirring is discontinued and the solution is left to stand to equilibrate to ambient conditions.

The embalming fluid of this invention is a generally natural products-based composition; it is odourless and non- toxic. It can be used without risk of irritation to skin, mouth and nasal passages. It obviates the need for excessive air changes in the embalming room.

The embalming fluid has proved successful in the treatment and preparation of cadavers prior to a funeral. Natural skin colours can be maintained and there were no unpleasant odours present.

No deterioration of the cadaver was recorded over a 7 day period (average).

Cadavers have been held for up to 7 days under refrigeration conditions without deterioration. It is estimated that under refrigeration, very extended periods would prove to present few problems. Tests were also carried out with no refrigeration for a period of 21 days after treatment. After 18 days some leakage was noted from the rectum but no packing had been used under the test conditions. The body began to deteriorate after this time period but not too seriously. Barometric pressure at this period was unusually low, with thunder, the ambient temperature being 12-14°C.

The invention will be illustrated in a nonlimiting manner by the following Example.

### Example 1

The body of a 53-year old caucasian female weighing 140lbs (64kg) was embalmed using an embalming fluid in accordance with this invention. The embalming process took place five days after the woman had died from carcinomatosis, the cadaver having been refrigerated at +2°C during this time. Rigor mortis had abated and the body was easily manouvrable when the embalming took place.

The embalming fluid consisted of a solution in water of the following ingredients:
1: Protanol GP 9356 - (FMC Biopolymer);
2: PVP-iodine - (Graymor Chemical Hamburg GmbH);
3: Rose oil - (Elixarome Limited; and
4: Carmine - (Cybercolors Ltd.).
5: Sodium hexametaphosphate - (Rhodia Consumer Specialities)
6: Sodium citrate - (ADM Ingredients Ltd.)

The relative proportions of these ingredients, by weight, was 1:2:3:4:5:6 = 0.35:0.2:0.008:0.02:0.14: 0.013. These proportions may otherwise be expressed as 1:2:3:4:5:6 = 1:0.57:0.023:0.057:0.4:0.037.

The major proportion of the fluid used was made up with water to give a solution having 1 part by weight of the above ingredients and 99 parts by weight water. A smaller amount of solution at twice this concentration (2 parts by weight of the above ingredients and 98 parts by weight water) can also be used for the major organs.

The body was washed prior to the embalming process and lower orifice plugging took place using an absorbent pad which had been immersed in the embalming fluid.

2 litres of the normal concentration embalming fluid were pumped into the vascular system of the cadaver, after which time the venous effusion was composed of embalming fluid rather than blood. 0.3 litres of the more concentrated fluid was then injected by means of a trocar into the abdominal cavity. The total quantity of fluid injected was thus 2.3 litres.

During the embalming process, the embalmer was wearing surgical (latex) gloves instead of the heavy, protective type needed when an embalming fluid based on formaldehyde is used. This permits greater dexterity and hence allows the embalming to proceed more readily.

Immediately after the embalming process had been completed, the cadaver had a natural skin tone and showed no signs of discoloration. There was no unpleasant odour.

The cadaver was kept at a temperature of 7°C for a period of seven days after which the skin tone was still natural in appearance, and the skin retained its suppleness. There was no evidence of discoloration or of deterioration of the tissue. There was still no unpleasant odour (a mild floral fragrance was evident), and no evidence of seepage of fluids from the body.

### Example 2

The body of an elderly male, approximately 80 years old, of average build and 6 ft. tall, was embalmed using an embalming fluid as described in Example 1 above. The embalming took place four days after death, by which time rigor mortis had abated and hypostasis was evident in the left side of the face, the left arm and hand. Both legs were slightly oedematous and the eyes were very sunken. The site chosen for injection of the embalming fluid was the right common carotid artery.

After one litre of fluid had been injected, it was apparent that the fluid was distributing around the body. Hypostasis was starting to clear and the face - in particular the lips and eyeballs - was filling out to a natural condition.

After 4 litres had been injected, drainage by the "heart tap" method was commenced, the trocar needle entering the right atrium. Abdominal drainage was also carried out, after which 1 litre of the more concentrated embalming solution was injected into the abdominal cavity.

At the end of the embalming process, the cadaver presented a relatively natural appearance, with arms, trunk and legs assuming a relatively natural colour. There was no oedema in the legs. The hands were soft and pliable. The face still had some mottled marks, but these were clearing, and the eyes and mouth had a full, natural appearance.

The cadaver was stored for five days prior to burial. After this period, there was no evidence of deterioration, either in terms of appearance or of odour. There was no bruising or discoloration of the tissues. The face, including the eyes, ears and lips, had a natural pink colour which was not evident prior to embalming.

## Claims

1. A pseudoplastic embalming fluid **characterised in that** it is essentially free of aldehyde, which fluid comprises:
(a) 0.05-3% by weight of a vegetable-based, water-soluble polymer producing a pseudoplastic solution when dissolved in water;
(b) 0.05-2% by weight of a non-toxic disinfectant which is free from formaldehyde; and the balance
(c) potable water,
the fluid optionally containing additionally one or more additives selected from perfumes, colorants, sequestrants and anti-coagulants.

2. An embalming fluid as claimed in claim 1, **characterised in that** said disinfectant is an iodine-based disinfectant.

3. An embalming fluid as claimed in claim 2, **characterised in that** said disinfectant is polyvinylpyrrolidone-iodine.

4. An embalming fluid as claimed in any preceding claim, **characterised in that** said polymer is a sodium alginate polymer.

5. An embalming fluid as claimed in any preceding claim, **characterised in that** it comprises 0.001-1% by weight of perfume and/or 0.01-0.08% by weight of colorant and/or 0.1-0.8% by weight of sequestrant and/or 0.01-0.05% by weight of anti-coagulant.

6. An embalming fluid as claimed in any preceding claim, **characterised in that** the ratio (by weight) of polymer to disinfectant is in the range from 10:1 to 0.5:1.

7. An embalming fluid as claimed in any preceding claim, **characterised in that** said fluid comprises:
(a) a sodium alginate polymer;
(b) polyvinylpyrrolidone-iodine;
and with the ratio (by weight) of polymer to disinfectant being in the range from 10:1 to 0.5:1.

8. An embalming fluid as claimed in any preceding claim **characterised in that** it comprises:
(a) 0.1-2% by weight of a sodium alginate polymer;
(b) 0.05-1% by weight of polyvinylpyrrolidone-iodine;
(c) 0.001-0.05% by weight of a perfume;
(d) 0.01-0.1% by weight of a colorant,
(e) 0.1-0.5% by weight of a sequestrant and
(f) 0.01-0.03% by weight of an anti-coagulant;
the balance being potable water.

9. An embalming fluid as claimed in any preceding claim, **characterised in that** the potable water is demineralised water or de-ionised water.

10. A concentrated solution to be diluted before use as a pseudoplastic embalming solution as claimed in any of the preceding claims.

11. A method of embalming, **characterised in that** it comprises injecting to the body which is to be embalmed an embalming fluid essentially free of aldehyde, as defined in any one of claims 1 to 9.

12. A kit for use in formulating an essentially aldehyde-free embalming fluid, the kit comprising, in packaged form, an alginate polymer; an iodine-based disinfectant; a perfume; a colorant, a sequestrant and an anti-coagulant.

13. A kit as claimed in claim 12, wherein said polymer is a sodium alginate and said disinfectant is polyvinylpyrrolidone-iodine.

## Patentansprüche

1. Pseudoplastische Einbalsaminierungsflüssigkeit, **dadurch gekennzeichnet, dass** sie im Wesentlichen frei von Aldehyd ist, wobei die Flüssigkeit umfasst:
(a) 0,05 bis 3 Gew.-% auf Pflanzen basierendes, wasserlösliches Polymer, das bei Lösung in Wasser eine pseudoplastische Lösung ergibt,
(b) 0,05 bis 2 Gew.-% nicht-toxisches Desinfektionsmittel, das frei von Formaldehyd ist, und als Rest
(c) Trinkwasser,
wobei die Flüssigkeit gegebenenfalls außerdem ein oder mehrere Additive ausgewählt aus Parfümen, Färbemitteln, Sequestriermitteln und Antikoagulantien enthält.

2. Einbalsaminierungsflüssigkeit nach Anspruch 1, **dadurch gekennzeichnet, dass** das Desinfektionsmittel ein auf Iod basierendes Desinfektionsmittel ist.

3. Einbalsaminierungsflüssigkeit nach Anspruch 2, **dadurch gekennzeichnet, dass** das Desinfektionsmittel Polyvinylpyrrolidon-Iod ist.

4. Einbalsaminierungsflüssigkeit nach einem der vorhergehenden Ansprüche, **dadurch gekennzeichnet, dass** das Polymer ein Natriumalginatpolymer ist.

5. Einbalsaminierungsflüssigkeit nach einem der vorhergehenden Ansprüche, **dadurch gekennzeichnet, dass** sie 0,001 bis 1 Gew.-% Parfüm und/oder 0,01 bis 0,08 Gew.-% Färbemittel und/oder 0,1 bis 0,8 Gew.-% Sequestriermittel und/oder 0,01 bis 0,05 Gew.-% Antikoagulanz umfasst.

6. Einbalsaminierungsflüssigkeit nach einem der vorhergehenden Ansprüche, **dadurch gekennzeichnet, dass** das Verhältnis (bezogen auf das Gewicht) von Polymer zu Desinfektionsmittel im Bereich von 10 : 1 bis 0,5 : 1 liegt.

7. Einbalsaminierungsflüssigkeit nach einem der vorhergehenden Ansprüche, **dadurch gekennzeichnet, dass** die Flüssigkeit umfasst:
(a) Natriumalginatpolymer,
(b) Polyvinylpyrrolidon-Iod,
wobei das Verhältnis (bezogen auf das Gewicht) von Polymer zu Desinfektionsmittel im Bereich von 10 : 1 bis 0,5 : 1 liegt.

8. Einbalsaminierungsflüssigkeit nach einem der vorhergehenden Ansprüche, **dadurch gekennzeichnet, dass** sie umfasst:
(a) 0,1 bis 2 Gew.-% Natriumalginatpolymer,
(b) 0,05 bis 1 Gew.-% Polyvinylpyrrolidon-Iod,
(c) 0,001 bis 0,05 Gew.-% Parfüm,
(d) 0,01 bis 0,1 Gew.-% Färbemittel,
(e) 0,1 bis 0,5 Gew.-% Sequestriermittel und
(f) 0,01 bis 0,03 Gew.-% Antikoagulanz,
wobei der Rest Trinkwasser ist.

9. Einbalsaminierungsflüssigkeit nach einem der vorhergehenden Ansprüche, **dadurch gekennzeichnet, dass** das Trinkwasser demineralisiertes Wasser oder deionisiertes Wasser ist.

10. Konzentrierte Lösung, die vor dem Gebrauch als pseudoplastische Einbalsaminierungslösung, wie sie gemäß einem der vorhergehenden Ansprüche beansprucht wird, zu verdünnen ist.

11. Verfahren zur Einbalsaminierung, **dadurch gekennzeichnet, dass** es das Einspritzen einer Einbalsaminierungsflüssigkeit, die im Wesentlichen frei von Aldehyd ist und gemäß einem der Ansprüche 1 bis 9 definiert ist, in den einzubalsamierenden Körper umfasst.

12. Kit zur Verwendung bei der Formulierung einer im Wesentlichen aldehydfreien Einbalsaminierungsflüssigkeit, wobei das Kit, in verpackter Form, Alginatpolymer, auf Iod basierendes Desinfektionsmittel, Parfüm, Färbemittel, Sequestriermittel und Antikoagulanz umfasst.

13. Kit nach Anspruch 12, bei dem das Polymer ein Natriumalginat ist und das Desinfektionsmittel Polyvinylpyrrolidon-Iod ist.

## Revendications

1. Un fluide d'embaumement pseudo-plastique **caractérisé en ce qu'**il est essentiellement exempt d'aldéhyde, le dit fluide comprenant :
(a) 0,03-3% en masse de polymère d'origine végétale soluble dans l'eau produisant une solution pseudo-plastique lorsqu'il est dissous dans l'eau ;
(b) 0,05-2% en masse de désinfectant non toxique exempt de formaldéhyde; et le restant
(c) de l'eau potable,
le dit fluide contenant éventuellement un ou plusieurs additifs additionnels choisis parmi les parfums, les colorants, les séquestrants et les anticoagulants.

2. Un fluide d'embaumement selon la revendication 1, dans lequel le désinfectant est un désinfectant à base d'iode.

3. Un fluide d'embaumement selon la revendication 2, dans lequel le désinfectant est la polyvinylpyrrolidone iodée.

4. Un fluide d'embaumement selon l'une quelconque des revendications précédentes, dans lequel le polymère est un polymère d'alginate de sodium.

5. Un fluide d'embaumement selon l'une quelconque des revendications précédentes, qui comprend 0,001 à 1% en masse de parfum et / ou 0,01 à 0,08% en masse de colorant et / ou 0,1 à 0,8% en masse de séquestrant et / ou 0,01 à 0,05% en masse d'anticoagulant.

6. Un fluide d'embaumement selon l'une quelconque des revendications précédentes, **caractérisé en ce que** la proportion (en masse) de polymère par rapport au désinfectant soit dans la gamme 10 :1 à 0.5 :1.

7. Un fluide d'embaumement selon l'une quelconque des revendications précédentes, qui comprend :
(a) un polymère d'alginate de sodium,
(b) la polyvinylpyrrolidone iodée,
et tel que la proportion (en masse) de polymère par rapport au désinfectant soit dans la gamme 10 :1 à 0.5 :1.

8. Un fluide d'embaumement selon l'une quelconque des revendications précédentes, qui comprend :
(a) 0,1 à 2% en masse de polymère d'alginate de sodium,
(b) 0,05 à 1% en masse de polyvinylpyrrolidone iodée,
(c) 0,001 à 0,05% en masse d'un parfum,
(d) 0,01 à 0,1% en masse d'un colorant,
(e) 0,1 à 0,5% en masse d'un séquestrant, et
(f) 0,01 à 0,03% en masse d'un anticoagulant,
le restant étant de l'eau potable.

9. Un fluide d'embaumement selon l'une quelconque des revendications précédentes, **caractérisé en ce que** l'eau potable est de l'eau déminéralisée ou de l'eau déionisée.

10. Une solution concentrée à diluer avant de l'utiliser comme fluide d'embaumement pseudo-plastique tel que défini dans l'une quelconque des revendications précédentes.

11. Une méthode d'embaumement, qui comprend l'injection dans le corps qui doit être embaumé, d'un fluide d'embaumement essentiellement exempt d'aldéhyde, et tel que défini dans l'une quelconque des revendications 1 à 9.

12. Un kit pour l'utilisation dans la formulation d'un fluide d'embaumement essentiellement exempt d'aldéhyde, le dit kit comprenant, sous la forme du produit emballé, un polymère d'alginate, un désinfectant à base d'iode, un parfum, un colorant, un séquestrant et un anticoagulant.

13. Un kit selon la revendication 12, dans lequel le dit polymère est de l'alginate de sodium et le dit désinfectant est de la polyvinylpyrrolidone iodée.
